# EUROPEAN PATENT APPLICATION

(11) **EP 4 644 745 A1**
(43) Date of publication of application: **05.11.2025**
(21) Application number: 23910795.6
(22) Date of filing: 28.12.2023
(51) Int. Cl.: F16K 31/04, F16K 31/524

(54) **DRIVING APPARATUS AND WATER VALVE**

(30) Priority: 31.12.2022 CN 202211734445
(71) Applicant: Zhejiang Sanhua Intelligent Controls Co.,Ltd, Shaoxing, Zhejiang 312530 (CN)
(72) Inventor: PENG, Chao, Shaoxing, Zhejiang 312530 (CN)
(74) Representative: Maikowski & Ninnemann Patentanwälte Partnerschaft mbB
(86) International application number: PCT/CN2023/142600
(87) International publication number: WO 2024/140878

(57) **Abstract**

A driving apparatus, comprising a lower housing, a motor, a fixing plate, a first cam portion, and a second cam portion. The motor is in limiting connection with the first cam portion; the motor can drive the first cam portion to rotate; the fixing plate is fixedly connected to the lower housing; the fixing plate abuts against the first cam portion; the first cam portion abuts against the second cam portion; the first cam portion can rotate relative to the second cam portion; the second cam portion is in limiting connection with the lower housing; the second cam portion can displace axially relative to the lower housing; and the first cam portion and the second cam portion are limited between the fixing plate and the lower housing. One embodiment of the present invention further provides a water valve using the described driving apparatus.

## Description

The present application claims the priority of the Chinese Patent Application No. 202211734445.3, titled "DRIVING DEVICE AND WATER VALVE", filed on December 31, 2022 with the China National Intellectual Property Administration, which is incorporated herein by reference in its entirety.

### FIELD

The present application relates to the technical field of motor driving devices and water valves, and in particular to a driving device and a water valve thereof.

### BACKGROUND

Water valves are control members of fluid transportation, which are mainly used to alter the flow direction of medium. They include a driving device, a connecting seat and a valve body. In a specific conventional technology, the driving device includes an upper housing, a motor, a motor mounting plate, a reduction gear set, a gear fixing plate, a driven cam, a driving cam, and a lower housing. The lower housing is fixed to the driven product. When the motor is powered, the output shaft of the motor generates rotational torque, which is amplified by the reduction gear set and drives the driving cam to rotate. When the protruding part of the driving cam rotates to the position of the protruding part of the driven cam, the driving cam pushes the driven cam to move downward. In this case, the driven cam applies an upward reactive force on the driving cam. This reactive force is transmitted to the lower housing through the driving cam, the motor mounting plate, and the upper housing, forming a mechanical equilibrium. In this solution, multiple components bear force, and the dimension chain is relatively long. As a result, the precision of the stroke of the driven cam is significantly affected by the machining tolerances of the components.

### SUMMARY

An object of the present application is to provide a driving device for improving action accuracy of a cam. Therefore, the following technical solutions are provided according to an embodiment of the present application.

A driving device includes a lower housing, a motor, a fixing plate, a first cam portion, and a second cam portion. The motor is connected to the first cam portion in a limiting manner, enabling the motor to drive the first cam portion to rotate. The fixing plate is fixedly connected to the lower housing, and the fixing plate abuts against the first cam portion. The first cam portion abuts against the second cam portion and can rotate relative to the second cam portion. The second cam portion is connected to the lower housing in a limiting manner and can move axially relative to the lower housing. The first cam portion and the second cam portion are limited between the fixing plate and the lower housing.

A water valve is further provided according to an embodiment of the present application adopting the driving device described above.

In the driving device provided by the above embodiment, the first cam portion and the second cam portion are limited between the fixing plate and the lower housing. During operation, the reactive force generated by the second cam portion is applied onto the fixing plate through the first cam portion. Since the fixing plate is fixedly connected to the lower housing, this reactive force is further transmitted to the lower housing, forming a mechanical equilibrium. Compared to the conventional technology, this design involves fewer load-bearing components, which helps to relatively improve the stroke accuracy of the second cam portion.

### BRIEF DESCRIPTION OF THE DRAWINGS

FIG. 1 is a schematic structural view showing a working state of a water valve structure provided according to an embodiment of the present application;
FIG. 2 is a schematic structural view showing another working state of the water valve structure provided according an embodiment of the present application;
FIG. 3 is a structural exploded view of a driving device provided according to an embodiment of the present application;
FIG. 4 is a partial cross-section view showing a fixing plate abutting against a first cam portion according to an embodiment of the present application;
FIG. 5 is a schematic structural view of a first cam portion provided according to an embodiment of the present application;
FIG. 6 is a schematic structural view of a second cam portion provided according to an embodiment of the present application;
FIG. 7 is a schematic view showing a first state of a first cam portion fitting with a second cam portion provided according an embodiment of the present application;
FIG. 8 is a schematic view showing a second state of a first cam portion fitting with a second cam portion provided according an embodiment of the present application;
FIG. 9 is a partial view showing a working state of a driving device provided according an embodiment of the present application;
FIG. 10 is a partial view showing another working state of a driving device provided according an embodiment of the present application;
FIG. 11 is a schematic structural view of a lower housing provided according an embodiment of the present application;
FIG. 12 is a schematic structural view of an elastic sheet provided according an embodiment of the present application;
FIG. 13 is an enlarged view of part I shown in FIG. 9.

### DETAILED DESCRIPTION OF THE EMBODIMENTS

In order to enable those skilled in the art to better understand the technical solutions provided by the present application, the technical solutions of the present application will be further described in detail below with reference to the accompanying drawings and specific embodiments. It should be noted that the core concept of a water valve provided according to the present application lies in the structure of the driving device. As for other components, such as a connecting seat, a valve body and a flow channel structure inside the valve body and the like, they can be adjusted adaptively based on requirements of different application scenarios of the system. It should be noted that the present application only describes the working mechanism of the water valve in a specific embodiment, and does not limit that the above-mentioned driving device can only be applied to the water valve with this structure.

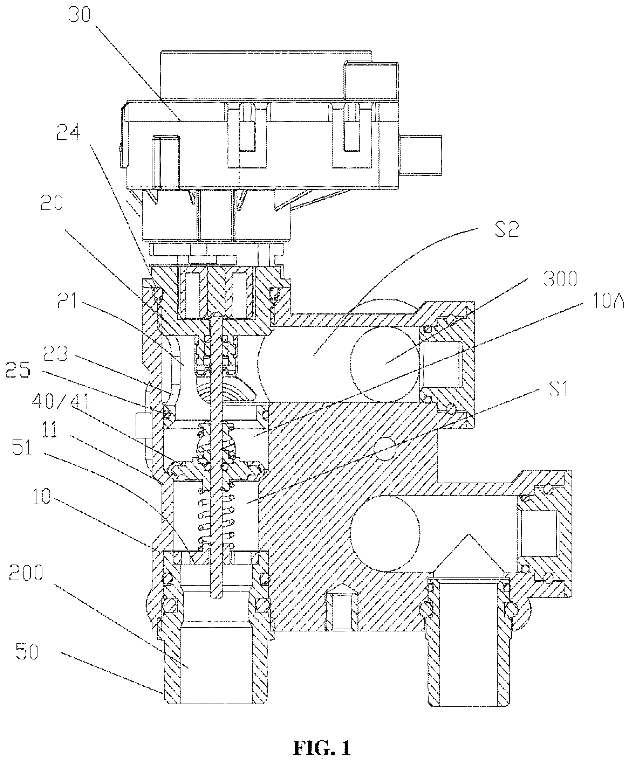

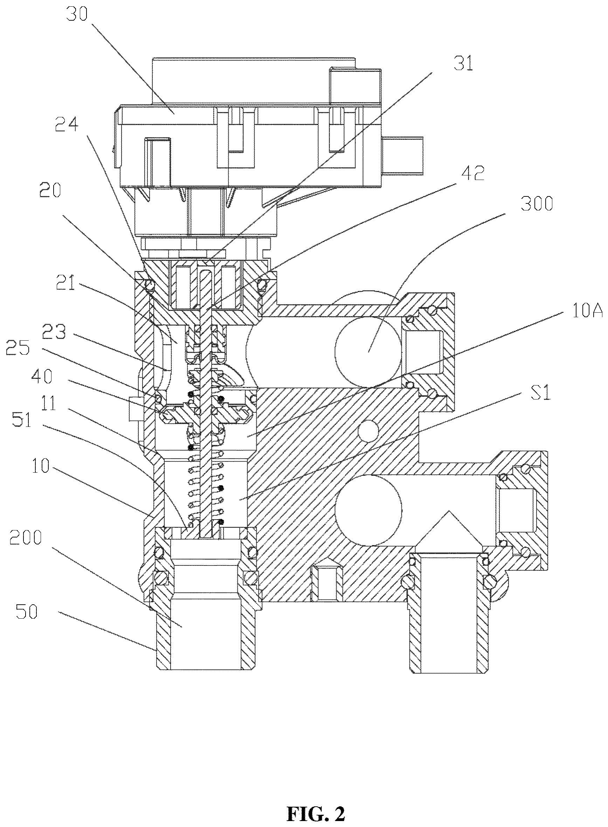

With reference to FIGS. 1 and 2, FIG. 1 is a schematic structural view showing a working state of a water valve structure provided according to an embodiment of the present application, and FIG. 2 is a schematic structural view showing another working state of the water valve structure provided according the embodiment of the present application. The water valve is provided with an inlet channel, a first outflow channel 200, and a second outflow channel 300. The water valve includes a valve body 10, a connecting seat 20, a driving device 30, a core assembly 40, a fixing seat 50, and a connecting plate 51, and the connecting seat 20 is fixedly connected to the valve body 10. In this embodiment, the connecting seat 20 and the valve body 10 may be fixed by means of threaded connection, and an upper sealing member 24 is provided between the connecting seat 20 and the valve body 10 to further enhance the effect of the sealing. The connecting seat 20 is also sealed with the valve body 10 through a lower sealing member 25, preventing the medium from flowing out. The connecting seat 20 is provided with a connecting seat cavity 21, and a side wall of the connecting seat 20 is provided with a connecting hole 23, which passes through the side wall of the connecting seat 20. The driving device 30 is located above the connecting seat 20 and includes a driving shaft 31, which can abut against a valve rod 42 of the core assembly 40 to move the core assembly 40 as a whole along an axial direction of the connecting seat 20.

The valve body 10 includes an abutting portion 11. The abutting portion 11 may be integrally formed with the valve body 10 by lathe machining or the like into an integrated structure. The abutting portion 11 provided by the embodiment of the present application may be a conical step portion or have other irregular-shaped structure, as long as it can play a support role with a valve core member 41 of the core assembly 40, and the specific shape of the abutting portion 11 is not be limited herein. An accommodating cavity 10A is formed in the water valve, which is defined by the lower sealing portion, the abutting portion 11, and an inner peripheral wall of part of the valve body 10 located between the lower sealing portion and the abutting portion 11. The valve core member 41 can move along an axis of the connecting seat 20 in the accommodating cavity 10A, and the valve core member 41 can abut against the lower sealing portion of the connecting seat 20 or the valve core member 41 can abut against the abutting portion 11. When the valve core member 41 moves axially upward and abuts against the lower sealing portion of the connecting seat, an upper sealing mating pair structure of the water valve is formed, at which time the medium enters the accommodating cavity 10A from the inlet channel and flows to the first outflow channel 200 through an opening where the abutting portion 11 is located. When the valve core member 41 moves axially downward and abuts against the abutting portion 11 of the valve body 10, a lower sealing mating pair structure of the water valve is formed, at which time the medium enters the accommodating cavity 10A from the inlet channel and flows to the second outflow channel 300 from the opening where the lower sealing portion is located.

The water valve further includes a first overflow channel S1 and a second overflow channel S2, and the accommodating cavity 10A can communicate with the first outflow channel 200 through the first overflow channel S1 and communicate with the second outflow channel 300 through the second overflow channel S2. The fixing seat 50 is fixedly connected with the valve body 10 to form sealing, and the connecting plate 51 is fixedly connected to the fixing seat 50. Multiple flow holes pass through the connecting plate 51to communicate the first overflow channel S1 with the first outflow channel 200. The inner peripheral wall of part of the valve body 10 located between the abutting portion 11 and the connecting plate 51 roughly forms the cavity wall of the first overflow channel S1, and the inner peripheral wall of the fixing seat 50 roughly forms the cavity wall of the first outflow channel 200. When the valve core member 41 abuts against the lower sealing portion of the connecting seat 20, the accommodating cavity 10A, the first overflow channel S1 and the first outflow channel 200 are communicated with each other. The inner peripheral wall of another part of the valve body 10 located between the connecting seat 20 and the opening of the second outflow channel 300 roughly forms the cavity wall of the second overflow channel S2. When the valve core member 41 abuts against the abutting portion 11, the accommodating cavity 10A, the connecting seat cavity 21, the second overflow channel S2 and the second outflow channel 300 are communicated with each other.

Under the excitation of the driving device 30, the driving shaft 31 presses against the valve rod 42 to move axially downwards, enabling the valve core member 41 to move axially downwards until it abuts against the abutting portion 11. When the driving shaft 31 is lifted up axially, the entire valve core member 41 is lifted up until the valve core member 41 abuts against the lower sealing portion of the connecting seat 20. In order to achieve a better sealing effect, the lower sealing portion may be in a conical structure, and the abutting portion 11 may be in a conical structure.

Next, the driving device 30 will be described in detail with reference to the drawings.

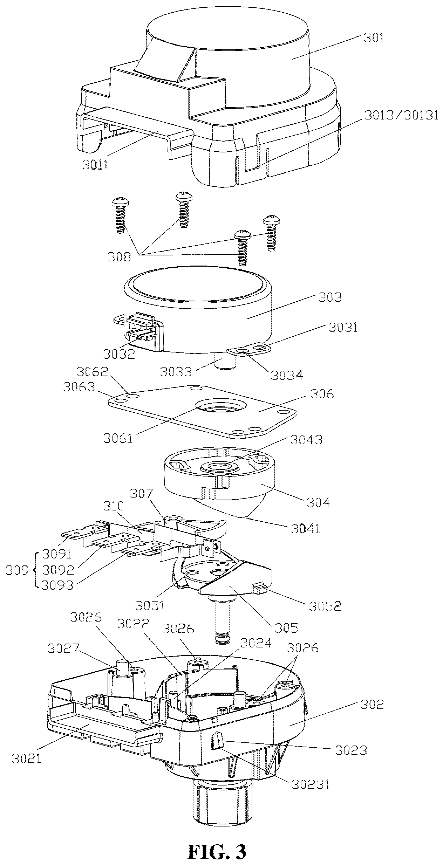

With reference to FIG. 3, FIG. 3 is a structural exploded view of a driving device provided according to an embodiment of the present application. The driving device 30 includes an upper housing 301 and a lower housing 302, which are fixed to each other to form a cavity. In order to further enable the upper housing 301 and the lower housing 302 to fit closely with each other, multiple first buckle portions 3013 may be arranged on an outer edge of the upper housing 301, and a corresponding number of second buckle portions 3023 may be arranged on an outer edge of the lower housing 302. Specifically, the first buckle portion 3013 is provided with a buckle hole portion 30131, and the second buckle portion 3023 is provided with a buckle step portion 30231. During assembly, the first housing 301 is moved downward along an axial direction shown in FIG. 3, enabling the first buckle portion 3013 to move toward the second buckle portion 3023. During the movement, the first buckle portion 3013 may abut against an inclined surface of the buckle step portion 30231, thus causing certain deformation in a radial direction. When the buckle step portion 30231 is in place, the buckle step portion 30231 will be engaged with the buckle hole portion 30133, thus achieving a limited connection and fixed engagement therebetween. Also, the skilled in the art, under the above enlightenment, may also dispose the first buckle portion on the lower housing 302 and the second buckle portion on the upper housing 301, and the same technical effect can be achieved. The driving device 30 further includes a terminal portion 3021, from which an insert described below extends. In this embodiment, the terminal portion 3021 is formed by locking a first protruding portion 3011 integrally formed with the upper housing 301 and a second protruding portion 3021 integrally formed with the lower housing 302.

In a space surrounded by the upper housing 301 and the lower housing 302, a motor 303, a fixing plate 306, a first cam portion 304 and a second cam portion 305 are provided. The motor 303 drives the first cam portion 304 to rotate, and the cam mechanism between the first cam portion 304 and the second cam portion 305 enables the second cam portion 305 to move in the axial direction. The second cam portion 305 is provided with a limiting hole portion 3051 and a limiting step portion 3052, and the limiting step portion 3052 may be integrally formed with the second cam portion 305 by injection molding. The lower housing 302 is provided with a limiting groove portion 3022 and a first limiting column portion 3024, which may be integrally formed with the lower housing 302 by injection molding. The limiting groove portion 3022 has a certain height along the axial direction (a vertical direction as shown in FIG. 3) of the lower housing 302. During mounting, the second cam portion 305 is loaded from above, so that the limiting step portion 3052 of the second cam portion 305 is fitted with the limiting groove portion 3022 and can slide up and down along the limiting groove portion 3022. At the same time, the first limiting column portion 3024 is inserted into the limiting hole portion 3051, in which case the second cam portion 305 is not rotable in the circumferential direction, and is only movable in the vertical direction relative to the lower housing 302. This fitting structure may also enable the second cam portion 305 and the lower housing 302 to have better coaxiality.

The first cam portion 304 cooperates with the motor output shaft 3033 of the motor 303 and is rotable along with the motor output shaft 3033. Specifically, the middle of the first cam portion 304 is provided with an irregular-shaped hole portion 3043, which is adapted to the cross-sectional shape of the motor output shaft 3033, in which case the first cam portion 304 may rotate with the rotation of the motor output shaft 3033. A fixing plate 306 is further provided between the first cam portion 304 and the motor 303. The fixing plate 306 is generally plate-shaped and is integrally formed of a metal material. The fixing plate 306 has a through hole portion 3061, which may be made by stamping, forms a flanging form relative to the fixing plate body, and forms a fixing plate pressing portion 30611 for abutting against the first cam portion 304. The through hole portion 3061 forms a through hole, and the motor output shaft 3033 passes through the through hole and is connected with the first cam portion 304 in a limited way. As a specific embodiment, the first cam portion 304 may further be provided with a cam pressing portion 3047, which protrudes in the axial direction and is used for abutting against the fixing plate pressing portion 30611. In this structure, the fixing plate pressing portion 30611 abuts against the cam pressing portion 3047, which is beneficial to preventing the first cam portion 304 from abutting against the fixing plate 306 due to the reaction force and reduce the noise.

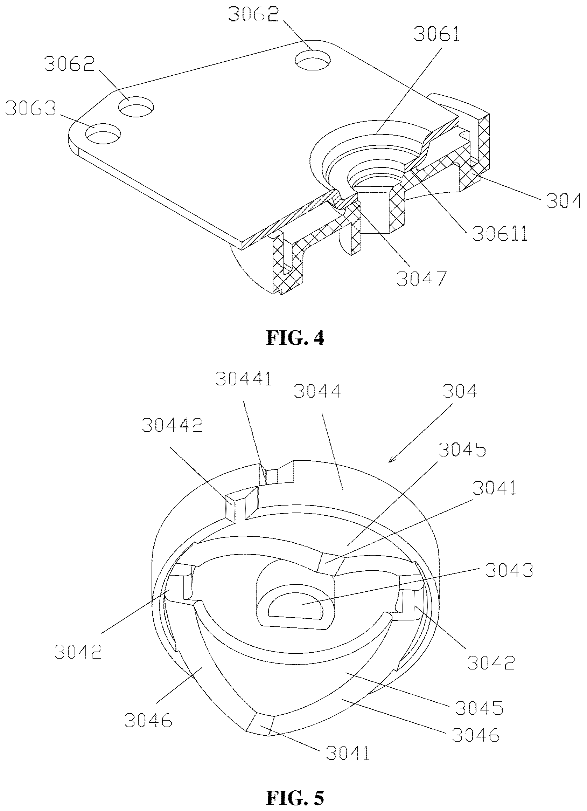

With reference to FIG. 4, FIG. 4 is a partial cross-section view showing a fixing plate abutting against a first cam portion according to an embodiment of the present application. The fixing plate 306 is provided with a first mounting hole portion 3062, and correspondingly, the lower housing 302 is provided with a second mounting hole portion 3026. In this embodiment, four first mounting hole portions 3062 and four second mounting hole portions 3026 are provided. Of course, those skilled in the art can understand that the number of the mounting hole portions can be set as required, and there is no need to limit the number. The fixing plate 306 is further provided with a limiting hole portion 3063, and correspondingly, the lower housing 302 is provided with a second limiting column portion 3027, which can also be injection-molded into an integrated structure with the lower housing 302. During assembly, the limiting hole portion 3063 of the fixing plate 306 is fitted with the second limiting column portion 3027 to realize fitting and limiting, and then the screw 308 is screwed into the first mounting hole portion 3062 and the second mounting hole portion 3026 for fixed connection, so that the fixing plate pressing portion 30611 of the fixing plate 306 abuts against the cam pressing portion 3047. The fitting between the second limiting column portion 3027 and the limiting hole portion 3063 is beneficial to ensuring the relative position between the fixing plate 306 and the lower housing 302 and improve the assembly accuracy.

As a derivative embodiment, the motor 303 may also be fixed together with the fixing plate 306 and the lower housing 302. The outer edge of the motor 303 is provided with multiple motor fixing hole portions 3031 and multiple motor limiting hole portions 3034. In this embodiment, the motor fixing hole portions 3031 and the motor limiting hole portions 3034 are both arranged at the outer edge of the motor. Of course, it is not limited to a hole shape, and other shapes such as an open groove shape may also achieve the purpose of positioning and fixing. The motor fixing hole portion 3031 is arranged corresponding to a part of the second mounting hole portion 3026 of the lower housing 302 after assembly, and the motor limiting hole portion 3034 is arranged corresponding to the second limiting column portion 3027 of the lower housing 302. In this way, by tightening the screw 308 and passing it through the motor fixing hole portion 3031, the first mounting hole portion 3062 of the fixing plate 306, and the second mounting hole portion 3026 of the lower housing sequentially, the motor 303, the fixing plate 306, and the lower housing 302 may be fixedly connected together. This assembly method eliminates the need for separate design of fixation for the motor, as it achieves precise relative positioning of both the motor 303 and the fixing plate 306 simultaneously through the arrangement of the second limiting column portion 3027.

In the above embodiment, the fixing plate 306 is fixedly connected with the lower housing 302, and the first cam portion 304 and the second cam portion 305 are restricted between the fixing plate 306 and the lower housing 302. The reaction force generated by the second cam portion 305 during operation is applied onto the fixing plate 306 through the first cam portion 304. Since the fixing plate 306 is fixedly connected to the lower housing 302, this reaction force is then transmitted to the lower housing, forming a thermodynamic balance. Compared to the technical solution in the background, there are fewer stress-bearing components, which is beneficial to improving the stroke accuracy of the second cam portion 305. Moreover, in this technical solution, the reaction force is basically not transmitted to the motor 303 and the upper housing 301. Therefore, the strength requirement for the upper housing 301 is relatively low, allowing for further reduction in the production cost of the upper housing 301.

With reference to FIG. 5, FIG. 5 is a schematic structural view of a first cam portion provided according to and embodiment of the present application. The first cam portion 304 includes a first body portion 3044 and a first annular portion 3045. The first body portion 3044 is generally plate-shaped, and the first annular portion 3045 is provided at the outer edge of one side of the first body portion 3044 and extends in the axial direction from the first body portion 3044. The first annular portion 3045 forms a first convex portion 3041, which is relatively further away from the first body portion 3044. With reference to the direction shown in FIG. 5, the first convex portion 3041 is located at the bottom of the first cam portion 304. The first annular portion 3045 may be a complete annular structure or a part of the complete annular structure in the circumferential direction. The first cam portion 304 further includes a first concave portion 3042 which is relatively close to the first body portion 3044. The first concave portion 3042 may be a concave portion of an integral first annular portion 3045 or a notch portion formed between two first annular portions 3045. A first transition portion 3046 is formed between the first convex portion 3041 and the first concave portion 3042, and a height of the first transition portion 3046 gradually decreases along a direction from the first convex portion 3041 to the first concave portion 3042. In this embodiment, as shown in FIG. 5, there are two first annular portions 3045, and the notch portion formed between two adjacent first annular portions 3045 is the first concave portion 3042. In this embodiment, two first convex portions 3041 and two first concave portions 3042 are provided, and correspondingly, four first transition portions 3046 are provided. When the first cam portion 304 cooperates with the second cam portion 305, with the rotation of the first cam portion 304, the first cam portion 304 may move along a stuck portion of the second cam portion 305 with the first convex portion 3041. The outer edge of the first body portion 3044 is provided with a first stuck groove 30441 and a second stuck groove 30442. Along the height direction of the first cam portion 304, the first stuck groove 30441 and the second stuck groove 30442 have different positions in the axial direction, that is, the first stuck groove 30441 is relatively close to the top of the first cam portion 304 and the second stuck groove 30442 is relatively far away from the first cam portion 304. The first stuck groove 30441 and the second stuck groove 30442 are used to cooperate with a swing arm assembly described below.

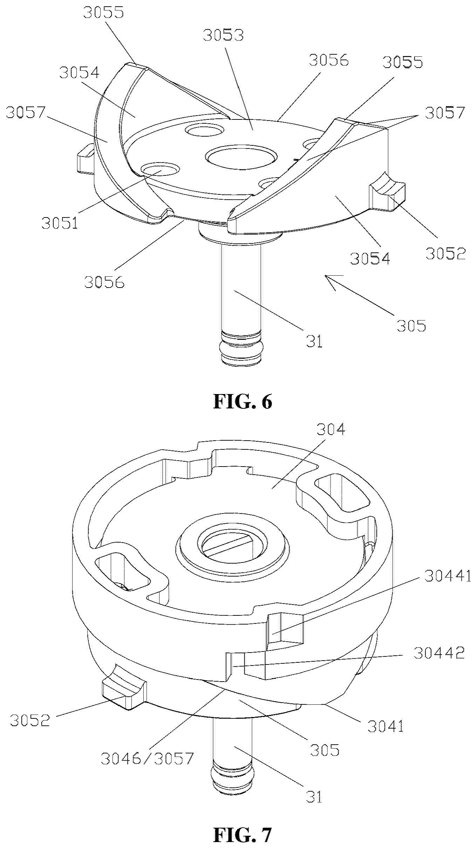

With reference to FIG. 6, FIG. 6 is a schematic structural view of a second cam portion provided according to an embodiment of the present application. The second cam portion 305 includes a second body portion 3053 and a second annular portion 3054. The second annular portion 3054 may be an annular structure or a part of an annular structure in the circumferential direction. The second body portion 3053 is generally plate-shaped, and the second annular portion 3054 is provided at the outer edge of one side of the second body portion 3053 and extends from the second body portion 3053 in the axial direction. Along the assembly direction of the first cam portion 304 and the second cam portion 305, the extension direction of the second annular portion 3054 is opposite to that of the first annular portion 3045, that is, they extend in opposite directions. The second annular portion 3054 forms a second convex portion 3055, which is relatively far away from the second body portion 3053. With reference to the direction shown in FIG. 6, the second convex portion 3055 is located at the top of the second cam portion 305. The second cam portion 305 further includes a second concave portion 3056 which is relatively close to the second body portion 3053. The second concave portion 3056 may be either a concave portion of an integral second annular portion or a notched portion formed between two second annular portions 3054. A second transition portion 3057 is formed between the second convex portion 3055 and the second concave portion 3056, and the height of the second transition portion 3057 gradually decreases along the direction from the second convex portion 3055 to the second concave portion 3056. The contour shape of the second transition portion 3057 matches the contour shape of the first transition portion 3046. In this embodiment, as shown in FIG. 6, there are two second annular portions 3054, and the notch portion formed between two adjacent second annular portions 3054 is the second concave portion 3056. In this embodiment, two second convex portions 3055 and two second concave portions 3056 are provided, and accordingly, four second transition portions 3057 are provided. The second cam portion 305 includes a driving shaft 31. As shown in FIG. 1, the driving shaft 31 may abut against the valve rod 42 of the core assembly 40, so that the core assembly 40 as a whole can move along the axial direction of the connecting seat 20.

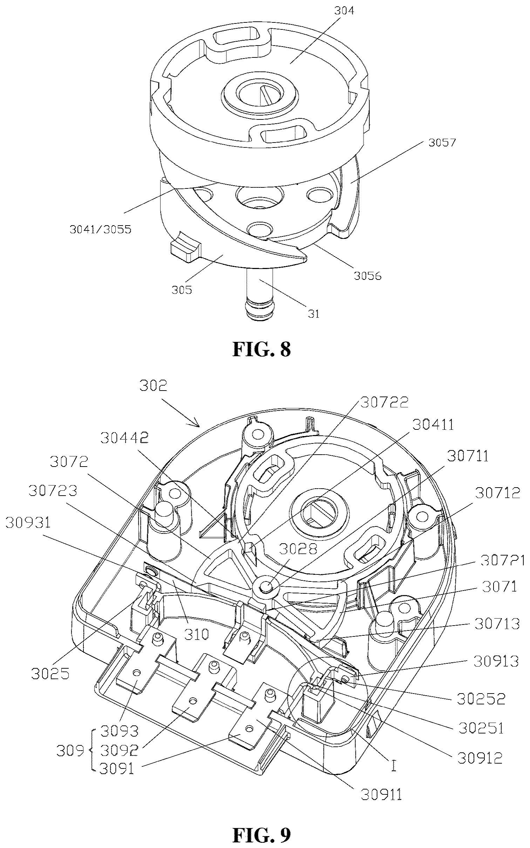

With reference to FIG. 7 and FIG. 8, FIG. 7 is a schematic view showing a first state of a first cam portion 304 cooperating with a second cam portion 305 provided according an embodiment of the present application, and FIG. 8 is a schematic view showing a second state of a first cam portion 304 cooperating with a second cam portion 305 provided according an embodiment of the present application. As shown in FIG. 7, the first transition portion 3046 of the first cam portion 304 is attached to the second transition portion 3057. At this time, the relative distance between the first cam portion 304 and the second cam portion 305 in the axial direction is the shortest. As shown in FIG. 8, since the second cam portion 305 is only movable in the axial direction rather than in the circumferential direction, the first convex portion 3041 may move along the surface of the second transition part 3057 when the first cam portion 304 rotates, thus pushing the second cam portion 305 and further moving the second cam portion 305 downward until the first convex portion 3041 abuts against the second convex portion 3055 of the second cam portion 305. At this time, the relative distance between the first cam portion 304 and the second cam portion 305 in the axial direction is the largest. With the continuous rotation of the first cam portion 304, the first convex portion 3041 may continue to move along the adjacent second transition portion 3057, so that one of the first transition portions 3046 may fit tightly with one of the second transition portions 3057 again, and the first cam portion 304 and the second cam portion 305 may be in the state of the shortest relative distance in the axial direction again.

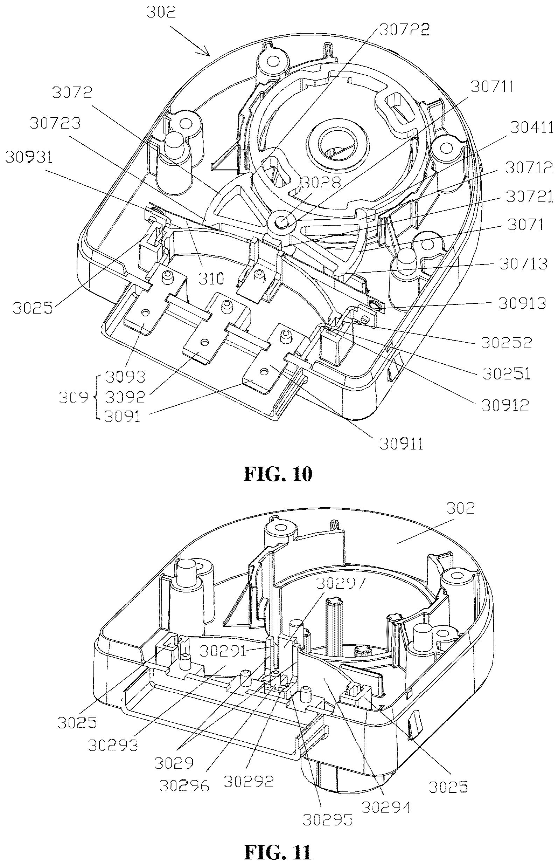

With reference to FIG. 9 and FIG. 10, FIG. 9 is a partial view showing a working state of a driving device provided according an embodiment of the present application, and FIG. 10 is a partial view showing another working state of a driving device provided according an embodiment of the present application. The lower housing 302 is provided with a positioning shaft portion 3028, which may be integrally formed with the lower housing 302 by injection molding. The swing arm assembly 307 includes a first swing arm portion 3071 and a second swing arm portion 3072. The first swing arm portion 3071 includes a first swing arm hole portion 30711 which is sleeved on the positioning shaft portion 3028 and is rotable relative to the positioning shaft portion 3028. The second swing arm portion 3072 includes a second swing arm hole portion 30721, which is mounted outside the positioning shaft portion 3028 and is rotable relative to the positioning shaft portion 3028. The second swing arm portion 3072 is closer to the bottom surface of the lower housing 302 than the first swing arm portion 3071. That is, based on the view shown in FIG. 9, the second swing arm portion 3072 is located below the first swing arm portion 3071. After the assembly, the first swing wall portion 3071 and the first stuck groove 30441 of the first cam portion 304 have approximately the same height, or they are approximately flush in the horizontal direction. The second swing arm portion 3072 and the second stuck groove 30442 have approximately the same height, or they are approximately flush in the horizontal direction. The first swing arm portion 3071 includes a first stuck portion 30712 and a first collision portion 30713, and the first stuck portion 30712 is arranged towards the first cam portion 304, and the first collision portion 30713 is arranged back to the first cam portion 304. The second swing arm portion 3072 includes a second stuck portion 30722 and a second collision portion 30723, and the second stuck portion 30722 is arranged towards the first cam portion 304, and the second collision portion 30723 is arranged back to the first cam portion 304. In this embodiment, the first swing arm portion 3071 is integrally processed and formed by injection molding, and the second swing arm portion 3072 is also integrally processed and formed by injection molding, which is beneficial to improving the strength of the first swing arm portion 3071 and the second swing arm portion 3072. The first stuck portion 30712 may abut against and be stuck with the first stuck groove 30441, so that the first stuck portion 30712 is relatively close to the first cam portion 304, while the first collision portion 30712 is away from an elastic sheet 310 described below. This state is shown in FIG. 10. The second stuck portion 30722 may abut against and be stuck with the second stuck groove 30442, and the second stuck portion 30722 is relatively close to the first cam portion 304, while the second collision portion 30713 is away from the elastic sheet 310 described below. When one of the first stuck portion and the second stuck portion is stuck with the corresponding stuck groove portion of the first cam portion 304, the other of the first stuck portion and the second stuck portion abuts against the outer edge of the body portion of the first cam portion 304, rather than being stuck with the corresponding stuck groove portion. In other words, that the first stuck portion 30712 being stuck with the first stuck groove 30441 while the second stuck portion 30722 being stuck with the second stuck groove 30442 will not happen at the same time, and vice versa.

With reference to FIG. 11, FIG. 11 is a schematic structural view of a lower housing provided according an embodiment of the present application. The lower housing 302 is provided with an elastic sheet restraining portion 3029, which is provided with an elastic sheet support portion 30291 and an elastic sheet positioning portion 30292. The elastic sheet support portion 30291 is used to support the elastic sheet 310, and the elastic sheet positioning portion 30292 is used to position the elastic sheet 310, which is beneficial to ensuring better assembly accuracy and improve assembly consistency when the elastic sheet 310 is mounted to the lower housing 302. The elastic sheet support portion 30291 and the elastic sheet positioning portion 30292 can be arranged in various ways. In one embodiment, as shown in FIG. 11, the elastic sheet restraining portion 3029 is formed by extending from the bottom surface of the lower housing 302 to the upper side as shown in the figure. The elastic sheet restraining portion 3029 includes a first pressure bearing surface portion 30293 and a second pressure bearing surface portion 30294. The first pressure bearing surface portion 30293 and the second pressure bearing surface portion 30294 are generally arc-shaped and may abut against the elastic sheet 310, which is beneficial to supporting the elastic sheet 310. In addition, the first pressure bearing surface portion 30293 and the second pressure bearing surface portion 30294 may separate the elastic sheet 310 from the insert 309, so as to prevent the wire at one end of the insert 309 from contacting with the elastic sheet and transmitting current. The elastic sheet restraining portion 3029 further includes an elastic sheet seat 30295, which may be integrally formed with the elastic sheet positioning portion 30292 by injection molding. The elastic sheet positioning portion 30292 is located on the elastic sheet seat 30295 and may enable the fitting and positioning of the elastic sheet 310, which is beneficial to improving the assembly accuracy of the elastic sheet 310.

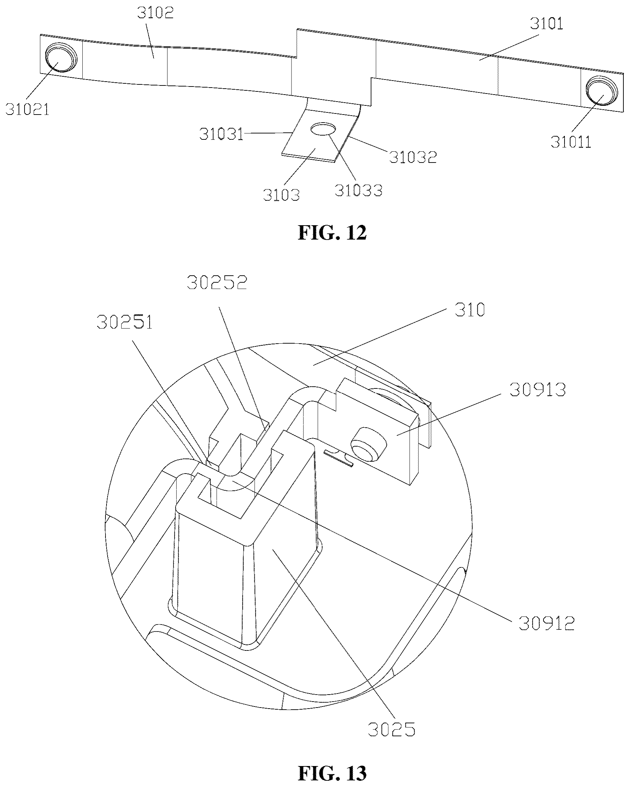

With reference to FIG. 12, FIG. 12 is a schematic structural view of an elastic sheet provided according an embodiment of the present application. The elastic sheet 310 includes a first elastic sheet arm 3101, a second elastic sheet arm 3102 and an elastic sheet fixing portion 3103. In this embodiment, the first elastic sheet arm 3101, the second elastic sheet arm 3102 and the elastic sheet fixing portion 3103 are integrally formed of metal materials, and the elastic sheet fixing portion 3103 is located at the middle of the elastic sheet 310, and the first elastic sheet arm 3101 and the second elastic sheet arm 3102 are located at both sides of the elastic sheet fixing part 3103 respectively. The elastic sheet fixing portion 3103 is bent relative to the first elastic sheet arm 3101 and the second elastic sheet arm 3102, that is, the extending direction of the elastic sheet fixing portion 3103 has a certain angle with the extending direction of the first elastic sheet arm 3101 or the second elastic sheet arm 3102. In the axial direction, the first elastic sheet arm 3101 and the first swing arm portion 3071 have approximately the same height, and are configured such that when the first swing arm portion 3071 swings in a clockwise direction shown in FIG. 9, the first elastic sheet arm 3101 may be pushed to move in the clockwise direction, so as to abut against one of the insert described below. Similarly, the second elastic sheet arm 3102 and the second swing arm portion 3072 have approximately the same height, and are configured such that when the second swing arm portion 3072 swings in a counterclockwise direction shown in FIG. 9, the second elastic sheet arm 3102 may be pushed to move in the counterclockwise direction, so as to abut against another insert described below. The elastic sheet fixing portion 3103 includes a first elastic sheet limiting portion 31031 and a second elastic sheet limiting portion 31032. Correspondingly, the elastic sheet positioning portion 30292 of the lower housing 302 is in the shape of a groove, and the width of the groove matches the width of the elastic sheet fixing portion 3103, so that the first elastic sheet limiting portion 31031 and the second elastic sheet limiting portion 31032 are restricted by the elastic sheet positioning portion 30292 after the elastic sheet 310 is assembled in the lower housing 302, realizing positioning and allowing the elastic sheet 310 to have better positioning accuracy after being assembled. In order to fix the elastic sheet 310 to the lower housing 302, an elastic sheet hole portion 31033 may be further provided on the elastic sheet 310, and correspondingly, a columnar portion 30296 may be provided on the elastic sheet seat 30295. The elastic sheet 310 may be more precisely positioned by mounting the elastic sheet hole portion 31033 outside the columnar portion 30296 for securing them together. The columnar portion 30296 can adopt various structural forms. As a derivative embodiment, the columnar portion 30296 may be configured as an expansion pin structure. After the elastic sheet 310 is inserted, the expansion pin will expand, restricting the detachment of the elastic sheet 310 and thereby locking the elastic sheet 310 in place to prevent the elastic sheet 310 from coming off. This design offers higher reliability. Of course, the columnar portion 30296 may also be configured as other possible structures. For example, after the elastic sheet is assembled, an end of the columnar portion can be deformed to prevent the elastic sheet from falling off, or external threads can be provided on the end of the columnar portion, and nuts can be screwed onto the end of the columnar portion to prevent the elastic sheet from falling off, and so on, which will not be described here.

The elastic sheet support portion 30291 is located on the same side of the first pressure bearing surface portion 30293 and the second pressure bearing surface portion 30294, that is, on the side of the elastic sheet restraining portion 3029 facing the first cam portion 304. The elastic sheet support portion 30291 is provided with at least a part of plane portion, so that when the elastic deformation of the elastic sheet 310 occurs, the elastic sheet 310 can be supported, which is beneficial to reducing the deformation of the elastic sheet 310 at the bending part and improving the working stability of the elastic sheet 310. In order to further limit the elastic sheet 310, an elastic sheet abutting portion 30297 may be further provided. The elastic sheet abutting portion 30297 and the elastic sheet restraining portion 3029 are staggered from each other to form a slit-like groove between them, and the width of the groove matches or is slightly larger than the thickness of the elastic sheet 310. During assembling, the elastic sheet 310 can be inserted into the groove, which can further improve the mounting accuracy of the elastic sheet, and can limit the displacement of the elastic 310 towards the swing arm. In other words, the elastic sheet restraining portion 3029 and the elastic sheet abutting portion 30297 jointly limit and position the middle part of the elastic sheet, which is beneficial to improving the position accuracy of the first swing arm portion and the second swing arm portion of the elastic sheet.

An end of the first elastic sheet arm 3101 is provided with a first elastic sheet contact 31011, which is arranged in the opposite direction to the swing arm assembly. An end of the second elastic sheet arm 3202 is provided with a second elastic sheet contact 31021, which is also arranged in the opposite direction to the swing arm assembly.

The lower housing 302 is provided with an insert positioning portion 3025 for fixing the insert. The insert positioning portion 3025 and the lower housing 302 may be integrally formed by injection molding. In this embodiment, two the insert positioning portions 3025 are provided, and they are integrated with the elastic sheet restraining portion 3029, which can enhance the strength of the elastic sheet restraining portion 3029 and the insert positioning portions 3025. Of course, the insert positioning portion 3025 and the lower housing 302 may be integrally formed by injection molding, while the insert positioning portion 3025 may be separated from the elastic sheet restraining portion 3029. These equivalent transformation forms can realize positioning the insert, and this embodiment does not limit this. Taking one of the insert positioning portions as an example, the insert positioning portion 3025 is provided with a first insert stuck portion 30251 and a second insert stuck portion 30252, and extending directions of the first insert stuck portion 30251 and the second insert stuck portion 30252 have a certain included angle. The insert positioning portion at least includes two plate-shaped parts with a certain angle. In the embodiment shown in FIG. 11, as a concrete structure, the two plate-shaped parts are generally vertical, and one plate-shaped part is provided with a groove as the first insert stuck portion 30251, and the other plate-shaped part is provided with a groove as the second insert stuck portion 30252. With reference to FIG. 13, FIG. 13 is an enlarged view of part I of FIG. 9.

The insert 309 includes a first insert 3091, a second insert 3092, and a third insert 3093, and the second insert 3092 can be used as a common terminal and electrically connected to one terminal of the motor, while the elastic sheet 310 is electrically connected to the other terminal of the motor through the elastic sheet fixing portion 3103. The above-mentioned electrical connection can be achieved by wire connection and other common connection methods in the field, and is not limited here. In this way, the first insert 3091, the elastic sheet 310 and the second insert 3092 may be a part of a circuit. The second insert 3092, the elastic sheet 310 and the third insert 3093 may be a part of another circuit. The insert 309 is connected to a controller

(not shown in the figure), so that the first insert 3091 and the second insert 3092 are powered on at the same time, or the second insert 3092 and the third insert 3093 are powered on at the same time.

Taking the first insert 3091 as an example, the first insert 3091 includes an insert connecting end 30911 and an insert fixing end 30912, and the insert fixing end 30912 has at least one bending portion. In a specific embodiment, the insert fixing end 30912 has two bending portions, so that the insert fixing end 30912 is inserted into the first insert stuck portion 30251 and the second insert stuck portion 30252 at the same time. In this way, the insert positioning portion 3025 can provide at least two directions of limit for the first insert, which is beneficial to realizing effective limit for the first insert 3091. The end of the insert fixing end 30912 is provided with a first insert contact 30913, which is used for abutting against the above-mentioned first elastic sheet contact 31011, so that the circuit can be closed when it is in the energized state. The third insert 3093 may have the same structure as the first insert 3091, and has a second insert contact 30931, and is fixed with another insert positioning portion 3025, which is not repeated here.

When in the working state as shown in FIG. 9, the first collision portion 30713 pushes the first elastic sheet arm 3101 of the elastic sheet 310 clockwise, so that the first elastic sheet contact 31011 abuts against the first insert contact 30913. At this time, the first insert 3091 and the second insert 3092 are energized, and the current forms a loop among the second insert 3092, the motor 303, the elastic sheet 310 and the first insert 3091. The motor 303 rotates and drives the first cam portion 304 to rotate. When it rotates to a certain angle, the second stuck portion 30722 comes out of the second stuck groove 30442 and abuts against the outer edge of the first body portion 3044. The second swing arm portion 3072 swings counterclockwise as shown in the figure, and the second elastic sheet contact 31021 of the second elastic sheet arm 3102 is pushed into contact with the second insert contact 30931 of the third insert 3093. The first cam portion 304 continues to rotate. When the first stuck portion 30712 abuts against the first stuck groove 30441 under the elastic force of the elastic sheet 310, the first swing arm portion 3071 swings counterclockwise as shown in the figure, so that the first elastic sheet contact 31011 of the first elastic sheet arm 3101 is separated from the first elastic sheet contact 30911. At this time, the motor is powered off and stops running, forming the working state shown in FIG. 10.

On the contrary, when in the working state shown in FIG. 10, the second insert 3092 and the third insert 3093 are energized, and the current forms a loop among the second insert 3092, the motor 303, the elastic sheet 310 and the third insert 3093. The motor 303 rotates and drives the first cam portion 304 to rotate. When the motor 303 rotates to a certain angle, the second stuck portion 30722 abuts against the second stuck groove 20442 under the elastic force of the elastic sheet 310. The second swing arm 3072 swings clockwise as shown in the figure, so that the second elastic sheet contact 31021 of the second elastic sheet arm 3102 is separated from the second insert contact 30931. At this time, the motor is powered off and stops running, resulting in the working state shown in FIG. 9.

It should be noted that the orientation terms such as up, down, left, right mentioned in the embodiment are all introduced for sake of description based on the drawings in the description; and the ordinal terms such as "first" and "second" in the component name are also introduced for sake of description, and do not mean to make any restriction on any order of the components. In addition, the technical features in the above embodiments can be partially replaced or combined in various ways to form a new embodiment. The description of the above embodiments is only used to help understand the method of the present application and its core idea, and does not limit the present application in any form.

## Claims

1. A driving device, comprising a lower housing (302), a motor (303), a fixing plate (306), a first cam portion (304), and a second cam portion (305), wherein the motor (303) is connected to the first cam portion (304) in a limiting manner for allowing the motor (303) to drive the first cam portion (304) to rotate,
the fixing plate (306) is fixedly connected to the lower housing (302) and abuts against the first cam portion (304),
the first cam portion (304) abuts against the second cam portion (305) and rotates relative to the second cam portion (305),
the second cam portion (305) is connected to the lower housing (302) in a limiting manner for allowing the second cam portion (305) to axially move relative to the lower housing (302), and
the first cam portion (304) and the second cam portion (305) are limited between the fixing plate (306) and the lower housing (302).

2. The driving device according to claim 1, wherein the fixing plate (306) is provided with a through hole portion (3061), which forms a through hole, and
the motor (303) comprises a motor output shaft (3033), which passes through the through hole and is connected to the first cam portion (304) in a limiting manner.

3. The driving device according to claim 2, wherein the through hole portion (3061) is formed by stamping, and the through hole portion (3061) has a fixing plate pressing portion (30611), which abuts against the first cam portion (304).

4. The driving device according to claim 3, wherein the first cam portion (304) is provided with a cam pressing portion (3047), and the fixing plate pressing portion (30611) abuts against the cam pressing portion (3047).

5. The driving device according to claim 1, wherein the fixing plate (306) is provided with a first mounting hole portion (3062), and the lower housing (302) is provided with a second mounting hole portion (3026), and the first mounting hole portion (3062) and the second mounting hole portion (3026) are fixedly connected to each other by screws.

6. The driving device according to claim 5, wherein the motor (303) is provided with a motor fixing hole portion (3031), which is arranged corresponding to the first mounting hole portion (3062) and the second mounting hole portion (3026), and the first mounting hole portion (3062), the second mounting hole portion (3026), and the motor fixing hole portion (3031) are fixed together by screws.

7. The driving device according to claim 5, wherein the fixing plate (306) is further provided with a limiting hole portion (3063), the lower housing (302) is provided with a second limiting column portion (3027), the second limiting column portion (3027) and the lower housing (302) are integrally formed, and the limiting hole portion (3063) cooperates with the second limiting column portion (3027) for limiting.

8. The driving device according to claim 7, wherein the motor (303) is provided with a motor limiting hole portion (3034), which is arranged corresponding to the second limiting column portion (3027), and the motor limiting hole portion (3034) cooperates with the second limiting column portion (3027) for limiting.

9. A water valve, comprising a valve body (10), a connecting seat (20), a driving device (30) and a core assembly (40), wherein the driving device (30) adopts the driving device according to any one of claims 1 to 7.
